# EUROPÄISCHE PATENTSCHRIFT

(11) **EP 2 477 352 B1**
(45) Veröffentlichungstag und Bekanntmachung des Hinweises auf die Patenterteilung: **31.10.2018**
(21) Anmeldenummer: 11075276.3
(22) Anmeldetag: 22.12.2011
(51) Int. Cl.: H04L 9/32, H04L 29/06

(54) **Verfahren zur Verifikation von Ausweisdaten im Kundenverkehr**
Verification of identification of Identity card data for customers handling
Procédé de vérification de données de carte d'identité pour la gestion de clients

(30) Priorität: 13.01.2011 DE 102011000112
(43) Veröffentlichungstag der Anmeldung: 18.07.2012
(73) Patentinhaber: Bundesdruckerei GmbH, 10969 Berlin (DE)
(72) Erfinder: Maggioni, Christoph, 10961 Berlin (DE); Rach, Andreas, 10119 Berlin (DE); Risse, Heinz, 10997 Berlin (DE)

(56) Entgegenhaltungen:
- EP-A1- 2 048 867
- DE-A1-102007 016 538
- DE COCK D ET AL: "Insights on identity documents based on the Belgian case study", INFORMATION SECURITY TECHNICAL REPORT, ELSEVIER ADVANCED TECHNOLOGY, AMSTERDAM, NL, Bd. 13, Nr. 2, 1. Mai 2008 (2008-05-01), Seiten 54-60, XP025474735, ISSN: 1363-4127, DOI: 10.1016/J.ISTR.2008.06.004 [gefunden am 2008-07-19]
- INTERNATIONAL CIVIL AVIATION ORGANIZATION: "PKI for machine readable travel documents offering ICC Read-only acess", INTERNET CITATION, 1. Oktober 2004 (2004-10-01), Seiten 1-57, XP002483403, Gefunden im Internet: URL:http://mrtd.icao.int/images/stories/Do c/ePassports/PKI_for_Machine_Readable_Trav el_Documents_offering_ICC_read-only_access _v1.1.pdf [gefunden am 2008-06-06]

## Beschreibung

Die vorliegende Erfindung bezieht sich auf ein Verfahren zur Verifikation von Personendaten im Kundenverkehr, wie durch den unabhängigen Patentanspruch beschrieben.

Mit Hilfe von Geräten und Softwareprodukten zur Verifikation von Personendaten, wie z.B. dem Produkt "Visocore Verify" der Anmelderin, kann ein Identitätsdokument auf Hinweise für Fälschungen oder Verfälschungen geprüft werden.

Der Markt hierfür ist der privatwirtschaftliche Bereich, in dem durch falsche oder manipulierte Identitäten hohe Kosten entstehen können, z.B. bei Autovermietung, beim Abschluss eines Mobilfunkvertrags u.ä..

Die Schadenshäufigkeit pro Jahr liegt dabei laut Polizeiquellen bei ca. 300 unterschlagenen Fahrzeugen, bei ca. 1.400 unterschlagenen Fahrzeugen laut CCUniRent und führt zu einer kumulierten Schadenshöhe zwischen 15 und 70 Millionen € pro Jahr.

Da üblicherweise für jeden abgeschlossenen Vertrag an den beteiligten Mitarbeiter Vermittlungsprämien gezahlt werden, besteht seitens der Beschäftigten ein hohes Interesse daran eine Vielzahl von Verträgen abzuschließen.

Vor einem Vertragsabschluss findet im Allgemeinen eine elektronische Bonitätsabfrage statt. Hier werden eine oder mehrere Blacklisten überprüft, wie sie von Dienstleistern auf dem Gebiet der Bonitätsprüfung, unter anderem von der Schufa, zur Verfügung gestellt werden. Scheitert die Bonitätsabfrage, so ist es durchaus gängige Praxis, dass der Bearbeiter, um diese Abfrage zu umgehen, die Namen des Kunden einfach neu eingibt und sich dabei solange "vertippt", bis die Bonitätsabfrage ein positives Ergebnis zeigt.

Ein derartiges Vorgehen schadet aber erheblich den Unternehmen in dessen Namen die entsprechenden Verträge geschlossen werden. Es besteht also eine Notwendigkeit die biographischen Daten des Identitätsdokuments mit den biographischen Daten im Computersystem des Anbieters auf möglichst sichere Art und Wesie zu vergleichen.

Ein weiteres Problem, das sich in diesem Bereich ergeben kann, ist die Möglichkeit, dass gefälschte Identitätsdokumente vorgelegt werden.

Der naheliegende Weg, die biographischen Daten aus einem Dokumentenlesegerät in das Computersystem des Anbieters zu Übertragen ist schon auf Grund der Gesetzgcbung in Deutschland (Passgesetz/Personalausweisgesetz) verboten.

Es bedarf also eines anderen Weges, um absichtliche oder unbeabsichtliche Tippfehler bei der Bonitätsabfrage zu erkennen und so unzutreffende Ergebnisse auszuschließen.

Das Dokument EP 2 048 867 A1 offenbart ein Verfahren und ein System zur Erzeugung und Verifikation eines digitalen Siegels auf einem analogen Dokument.

Im Dokument DE 10 2007 016 538 sind ein Kommunikationsendgerät, eine Kommunikationseinrichtung, eine elektronische Karte, ein Verfahren für ein Kommunikationsendgerät und ein Verfahren für eine Kommunikationsreinrichtung zum Bereitstellen eines Nachweises beschrieben

Die Veröffentlichung von DE COCK D ET AL: "Insights on identity documents based on the Belgian case study", XP025474735, offenbart ePässe und eID-Karten mit Belgischen Identitätsdokumenten als Referenz.

Das Dokument von der INTERNATIONAL CIVIL AVIATION ORGANIZATION mit dem Titel "PKI for machine readable travel documents offering ICC Read-only access", XP002483403" offenbart ein Auslesen von elektronischen Reisedokumenten unter Verwendung einer Public Key Infrastructure (PKI).

Der Erfindung liegt demgegenüber die Aufgabe zugrunde, ein besonders sicheres Verfahren zur Verifikation von Personendaten im Kundenverkehr bereitzustellen.

Die der Erfindung zugrunde liegende Aufgabe wird mit den Merkmalen des unabhängigen Patentanspruchs gelöst. Ausführungsformen der Erfindung sind in den abhängigen Patentansprüchen angegeben.

Vorgesehen ist daher ein Verfahren zur Verifikation von Personendaten im Kundenverkehr, bei dem zunächst ein erstes Prtifkennzeichen auf der Basis der Personendaten mittels eines ersten Algorithmus in einem Prüfgerät zur Erkennung gefälschter Identitätsdokumente berechnet wird, dieses erste Prüfkennzeichen auf ein Computerterminal, vorzugsweise elektronisch, übertragen wird, dann im Computerterminal auf der Basis der Personendaten mittels des gleichen, ersten Algorithmus ein zweites Prüfkennzeichen berechnet wird und das erste und zweite Prüfkennzeichen im Computerterminal auf Übereinstimmung verglichen werden, wobei die Personendaten bei Übereinstimmung des ersten und zweiten Prüfkennzeichens an einen Datenbankserver übertragen werden.

Das Prüfkennzeichen ist dabei vorzugsweise kurz und kann z.B. aus vier Zeichen bestchen.

Die Personendaten, die zur Berechnung der Prüfkennzeichen herangezogen werden, bestehen vorzugsweise aus dem Namen des Kunden und können darüber hinaus wahlweise aus der Gruppe bestehend aus Geburtsdatum und/oder Geburtsort ausgewählt sein. Weitere mögliche Daten, die zur Bildung des Prüfkennzeichens herangezogen werden können sind die Dokumentennummer, das Ausstellungsdatum des Identitätsdokuments oder das Ablaufdatum des Identitätsdokuments, wie auch das Ergebnis der Echtheitsprüfung, das Datum der Prüfung, die Uhrzeit der Prüfung, die Filialnummer oder Daten des Verkäufers.

Dabei kann zur Übertragung der Personendaten an den Datenbankserver ein mehrstufiges, kryptografisches Protokoll ausgeführt werden. Hierbei wird vorzugsweise ein spezifisches Zeichenalphabet von 36 Zeichen verwendet.

Zur Ausführung des kryptografischen Protokolls kann dabei eine Zufallszahl bzw. eine Pseudozufallszahl berechnet werden, woraufhin dann aus dem Namen, dem zweiten Prüfkennzeichen und der Zufallszahl eine Zeichenkette gebildet wird, die Zeichenkette auf eine Sendezeichenkette gestreut wird, die Sendezeichenkette an den Datenbankserver gesendet wird und am Datenbankserver die Streuung umgekehrt und die Zufallszahl getrennt wird.

Die Zeichenkette kann dabei nach dem Prinzip einer Rotationsmaschine auf die Sendezeichenkette gestreut werden.

Am Datenbankserver kann dann aus dem Namen ein drittes Prüfkennzeichen nach dem ersten Algorithmus berechnet werden und dieses mit dem übertragenen, zweiten Prüfkennzeichen auf Übereinstimmung verglichen werden.

Darüber hinaus kann aus den an den Datenbankserver übertragenden Daten ein Hashwert berechnet werden, der ebenfalls an den Datenbankserver übertragen und am Datenbankserver überprüft wird.

Das hier vorgestellte Verfahren erzeugt beispielsweise aus Name und Vorname, der Uhrzeit (optional) und dem Prüfergebnis der Dokumentenprüfung ein Prüfkennzeichen. Der Kundenberater gibt nun den Namen und den Vornamen in sein IT-System ein. Zusätzlich trägt er das Prüfkennzeichen manuell in seine Eingabemaske des IT Systems ein oder das Prüfkennzeichen wird elektronisch übermittelt. Die Übertragung des Prüfkennzeichens auf das Computerterminal kann auch durch eine Kombination aus manuellen und elektronischem Vorgehen erfolgen, indem beispielsweise das Prüfkennzeichen durch einen Betriebsystembefehl in die Zwischenablage des IT-Systems genommen und durch einen weiteren Betriebssystembefehl aus der Zwischenablage in die Zielapplikation des IT-Systems übernommen werden. Dies ist nicht zwingend notwendig gesetzlich ausgeschlossen, da getrennte Applikationen auf einen Rechner anders zu warten sein können, als eine einzelne, monolithisch ausgeprägte Applikation (beispielsweise aus einem Kompilations- und Bindeprozess resultierend).

Bei der Auswahl des Verfahrens muss, um in der BRD den Anforderungen des Datenschutzes genüge zu tragen, sichergestellt werden, dass nicht aus dem Prüfkennzeichen auf den Namen rückgeschlossen werden kann.

Ermöglicht wird auf diese Weise eine einfache Überprüfung der Übereinstimmung zwischen biographischen Dokumentendaten und biographischen Kundendaten im System.

Weitere Eigenschaften und Vorteile der Erfindung ergeben sich aus der folgenden rein illustrativen und in keiner Weise beschränkenden Beschreibung einer Ausführungsform unter Bezugnahme auf die beigefügten Zeichnungen darin zeigen:
- Figuren 1 bis 3: in schematischer Art und Weise die Vorgehensweise nach dem Stand der Technik;
- Figuren 4 und 5: in schematischer Art und Weise das Verfahren gemäß einer bevorzugten Ausführungsform.

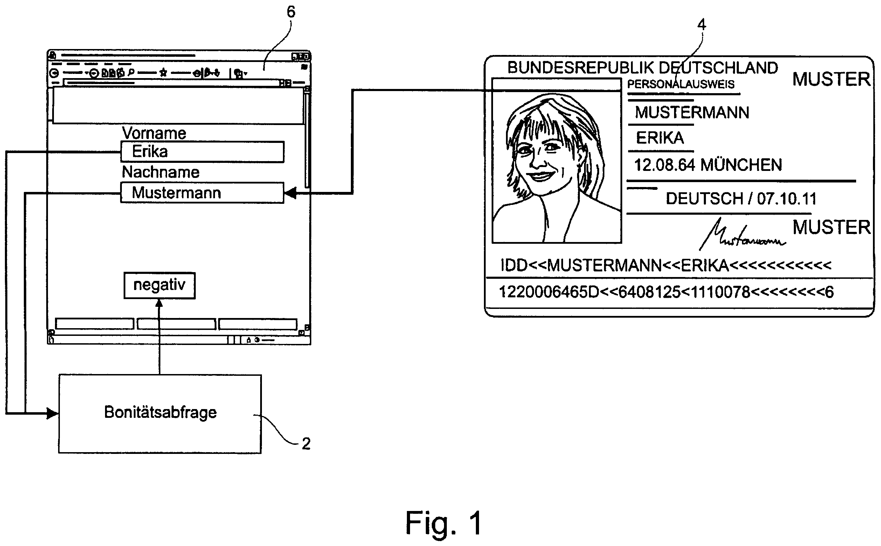

Die Figuren 1 bis 3 zeigen in schematischer Art und Weise die Vorgehensweise der Identitätsprüfung, wie sie im Kundenverkehr bei Mobilfunkbetreibern oder Autovermietungen jeden Tag zu tausenden stattfindet.

Vor einem Vertragsabschluss findet eine elektronische Bonitätsabfrage 2 statt. Hierzu werden Blacklisten auf Datenbankservern überprüft, wie sie unter anderem von der Schufa zur Verfügung gestellt werden. Dabei werden die Personendaten bestehend aus Vor- und Nachnamen von einem Identitätsdokument 4, wie im dargestellten Fall eines Personalausweises, in die Maske eines Computerterminals 6 eingegeben. Der Abgleich der eingegebenen Daten mit den gespeicherten Daten der Blacklist führt bei dem in Fig. 1 dargestellten Beispiel zu einem negativen Ergebnis, d.h. dass die Abfrage die Bonität des Kunden verneint. Das negative Ergebnis hat im Weiteren zur Folge, dass ein Vertragsabschluss nicht zustande kommen soll, aufgrund der Zweifel an der Bonität des potentiellen Kunden.

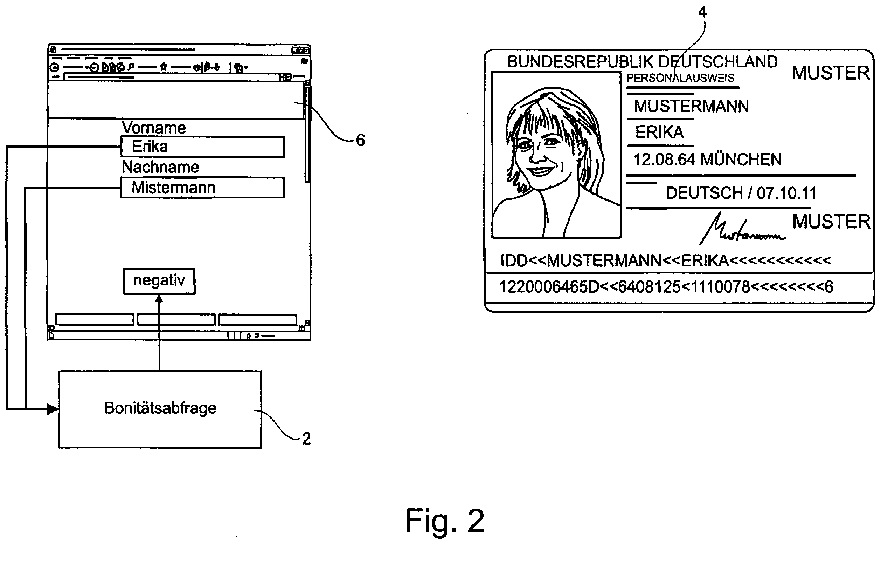

In Figur 2 wird zur Umgehung eines negativen Ergebnisses bei einer Bonitätsanfrage 2 der Name des potentiellen Kunden durch den Kundenberater in einem Buchstaben variiert, so dass im gezeigten Beispiel aus "Mustermann" der Name "Mistermann" wird. Der Kundenberater "vertippt" sich also gewollt, ggf. auch unabsichtlich. Auch in dieser Variation ist das Resultat der Bonitätsabfrage 2 negativ.

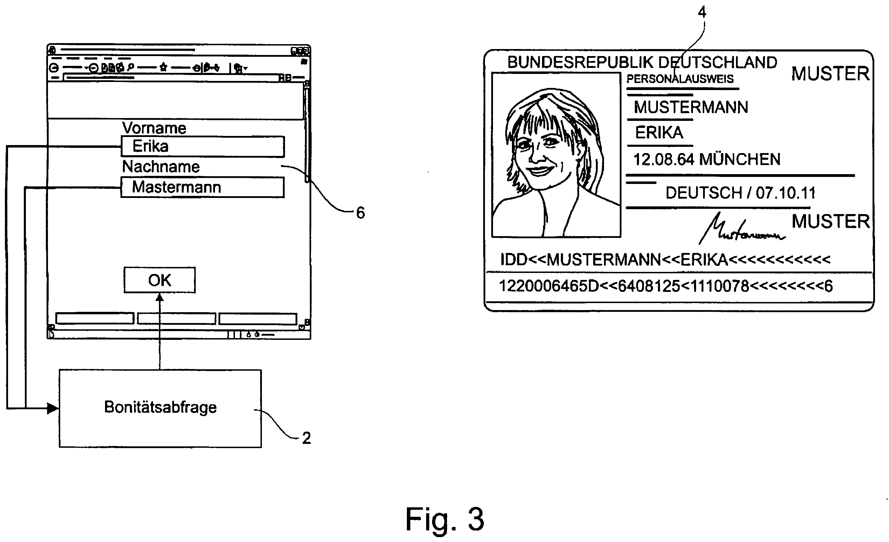

In der Figur 3 wird der Name durch den Kundenberater erneut in einem Buchstaben variiert, so dass im gezeigten Beispiel aus "Mistermann" der Name "Mastermann" wird. Die Bonitätsprüfung führt zu einem positiven Resultat, d. h. die Bonität des potentiellen Kunden wird bestätigt und es kann zu einem Vertragsabschluss kommen. Letztendlich schadet diese Möglichkeit aber dem Unternehmen, in dessen Name der Vertrag abgeschlossen wird, da ja tatsächlich, also bei Verwendung des richtigen Namens, die Bonität verneint wurde (Figur 1).

Sowohl durch eine absichtliche Variation des Namens, als auch durch ein unabsichtliches Vertippen seitens des Mitarbeiters wird eine Transaktion, wie beispielsweise das Verleihen eines Fahrzeuges, genehmigt, obwohl diese nicht hätte durchgeführt werden dürfen.

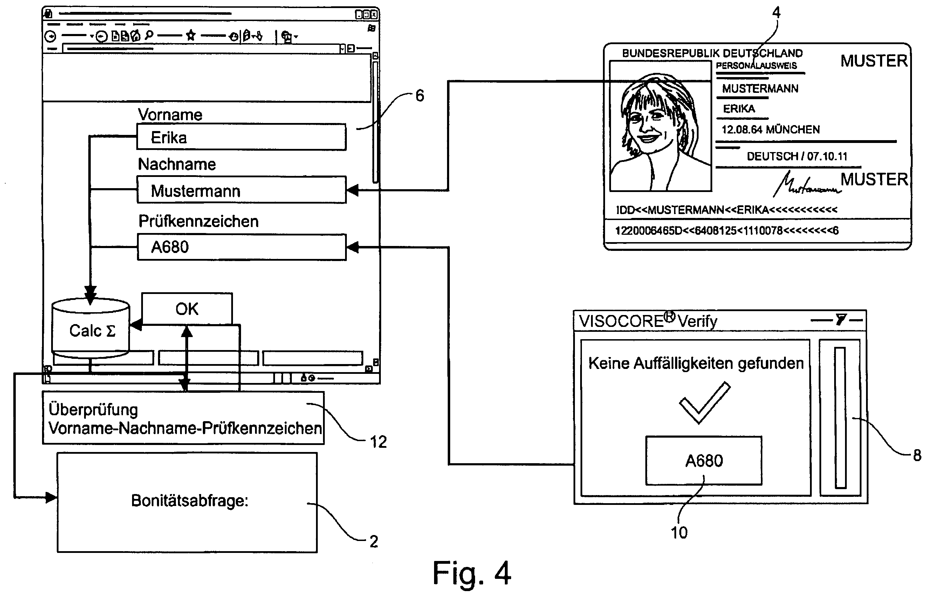

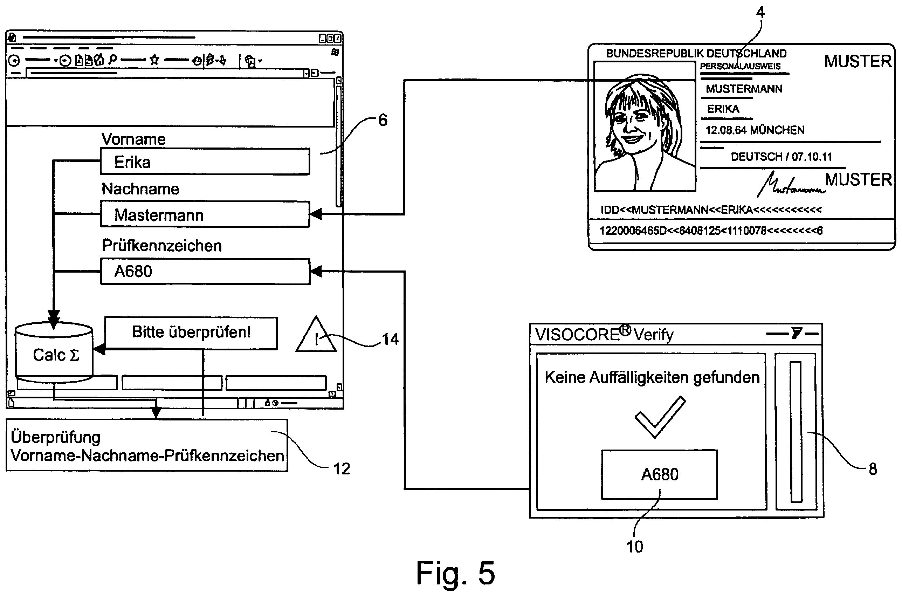

In Figur 4 und 5 nun ist eine die bevorzugte Ausführungsform des Verfahrens zur Verifikation von Personendaten im Kundenverkehr nach Maßgabe der vorliegenden Erfindung gezeigt. Dabei wird zunächst ein erstes Prüfkennzeichen 10 auf der Basis der Personendaten eines Identitätsdokumentes 4 mittels eines ersten Algorithmus in einem Prüfgerät 8 zur Erkennung gefälschter Identitätsdokumente 4 berechnet.

Dieses erste Prüfkennzeichen 10 wird elektronisch auf das Computerterminal 6 übertragen. Im Computerterminal 6 wird auf der Basis der Personendaten mittels des gleichen, ersten Algorithmus ein zweites Prüfkennzeichen (nicht gezeigt) berechnet. Das erste 10 und zweite Prüfkennzeichen werden im Computerterminal 6 dann auf Übereinstimmung verglichen und die Personendaten bei Übereinstimmung des ersten 10 und zweiten Prüfkennzeichens an einen Datenbankserver auf dem die Bonitätsabfrage 2 erfolgt, übertragen.

Wie der Figur 4 zu entnehmen ist, ist das Prüfkennzeichen 10 dabei kurz und besteht im gezeigten Beispiel lediglich aus vier Zeichen.

Zur Übertragung der Personendaten an den Datenbankserver wird ein mehrstufiges, kryptografisches Protokoll ausgeführt, unter Verwendung eines spezifischen Zeichenalphabetes von 36 Zeichen.

Zur Ausführung des kryptografischen Protokolls wird dabei eine Pseudozufallszahl berechnet, woraufhin dann aus dem Namen, dem zweiten Prüfkennzeichen und der Zufallszahl eine Zeichenkette gebildet wird, die Zeichenkette nach dem Prinzip einer Rotationsmaschine auf eine Sendezeichenkette gestreut wird, die Sendezeichenkette an den Datenbankserver gesendet wird und am Datenbankserver die Streuung umgekehrt und die Zufallszahl getrennt wird.

Am Datenbankserver wird dann zunächst aus dem Namen ein drittes Prüfkennzeichen nach dem ersten Algorithmus berechnet und dieses mit dem übertragenen, zweiten Prüfkennzeichen auf Übereinstimmung verglichen 12. Fällt diese Übereinstimmung positiv aus, erfolgt die Bonitätsprüfung 2. Im negativen Fall, wie in Figur 5 dargestellt, wird eine entsprechende Warnung ausgegeben 14. So wird sichergestellt, dass die Bonitätsprüfung sich tatsächlich auch nur auf den angegebenen Namen bezieht. Es kommt also nur dann zu einem Vertragsabschluss, wenn auch der zutreffende Name des potentiellen Kunden überprüft wurde.

Ein Beispiel für die Berechnung eines vierstelligen Vorgangskennzeichen ohne Zeitangabe könnte dabei wie folgt aussehen.

Anforderungen:
- Datenalphabet mit 37 Zeichen: 0-9, A-Z, < (OCR-B exakt wie in der MRZ)
- Ausgabealphabet mit 34 Zeichen: A-N, P-Z, 1-9
- Extrahierbares Prüfungsergebnis
- Getrennte Verifikation des Vor- und Nachnamens. Dabei müssen alle Bestandteile beider Namenskomponenten aus der VIZ paarweise versucht werden, wenn ein Paar passt, ist die Verifikation erfolgreich. Beispiel: Bei Anna Maria Meier-Schmidt müssen die Paare Anna Meier, Anna Schmidt, Maria Meier und Maria Schmidt geprüft werden.
- Integration einer Prüfziffer
- Integration einer Zufallszahl
- Codierung des ersten Nachnamens und ersten Vornamens aus der MRZ
- Implementierung der Überprüfungsroutine vorzugsweise als VB-Makro zur Einbindung in Excel.

Codierung:
- E Prüfergebnis: 1 Bit: 0 für Okay, 1 für Problem
- **N** Name: 7 Bit **N1-N7**
- **V** Vorname: 7 Bit **V1-V7**
- **P** Prüfziffer: 1 Bit
- **Z** Zufallszahl: 4 Bit **Z1-Z4**

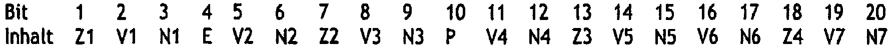

Berechnung der Werte der Namen:
1. Bilde die Buchstaben des Namens/Vornamens auf Zahlen ab: A->0....Z->25
2. Beachte, dass es keine Leerzeichen gibt, es wird die erste Komponente des jeweiligen Namensteils aus der MRZ benutzt. Beachte, dass primärer und sekundärer Identifier in der MRZ durch << getrennt sind, Komponenten in den Namen durch <.
3. Addiere die den Buchstaben zugeordneten Werte.
4. Bilde die Restklasse mod 128.
5. Weise die Bits dieser Zahl mit dem höchstwertigen Bit beginnend den Bits N1 bis N7 bzw. V1 bis V7 zu.

Berechnung der Zufallszahl:
- Berechne eine 4-Bit-Zufallszahl nach selbst gewähltem Verfahren.
- Starte bei jedem Start der Applikation mit anderem Seed.

Berechnung der Prüfziffer:
- Setze das Prüfbit so, dass die Anzahl der Bits mit dem Wert 1 gerade ist.

Umrechnung in Vorgangskennzeichen:
1. Der Bitvektor ist als Dualzahl interpretierbar, höherwertige Bits links.
2. Rechne diese Zahl in eine (vierstellige) Darstellung zur Basis 34 um.
3. Interpretiere diese Darstellung entsprechend der folgenden Tabelle.

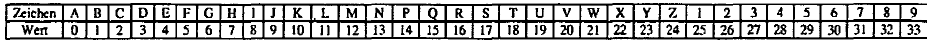

Beispiel:
- ANDREAS wird zu 0,13,3,17,4,0,18 wird zu 55 = 55 mod 128. Das ist binär 0110111.
- WOLF wird zu 22,14,11,5 wird zu 52 = 52 mod 128. Das ist binär 0110100.
- Würfle binär 1101.
- Die Prüfung möge okay gewesen sein, also 0.
- Um geradzahlig viele Einsen zu haben, ist das Prüfbit 1.
- Der Vektor des Vorgangskennzeichens ist also 1000.1111.1100.0111.0110.
- Das entspricht 588918. Im 34er-System ist das 14,33,15,4.
- Daraus wird P9QE.

Ausnahmeregelungen:
- Akademische Grade ("DR") in der MRZ sind zu ignorieren. Taucht regelwidrig doch der String "DR<" in der MRZ auf, fängt der Nachname danach an.
- Hat ein Name keinen Vomamensbestandteil, ist der Vorname ein leerer String, der Wert also Null.

## Patentansprüche

1. Verfahren zur Verifikation von Personendaten im Kundenverkehr, mit den Schritten:
Berechnung eines ersten Prüfkennzeichens auf der Basis der eingelesenen Personendaten eines Identitätsdokumentes mittels eines ersten Algorithmus in einem Prüfgerät zur Erkennung gefälschter Identitätsdokumente;
Übertragung des ersten Prüfkennzeichens auf ein Computerterminal;
Berechnung eines zweiten Prüfkennzeichens auf der Basis der Personendaten mittels des ersten Algorithmus in dem Computerterminal;
Vergleich des ersten und zweiten Prüfkennzeichens im Computerterminal auf Übereinstimmung; und
bei Übereinstimmung des ersten und zweiten Prüfkennzeichens Übertragung der Personendaten an einen Datenbankserver,
wobei zur Übertragung der Personendaten an den Datenbankserver ein mehrstufiges, kryptografisches Protokoll ausgeführt wird,
wobei zur Ausführung des kryptografischen Protokolls eine Zufallszahl berechnet wird, aus den Namen, dem zweiten Prüfkennzeichen und der Zufallszahl eine Zeichenkette gebildet wird, die Zeichenkette auf eine Sendezeichenkette gestreut wird, die Sendezeichenkette an den Datenbankserver gesendet wird und am Datenbankserver die Streuung umgekehrt und die Zufallszahl getrennt wird,
wobei am Datenbankserver aus dem Namen ein drittes Prüfkennzeichen nach dem ersten Algorithmus berechnet wird und dieses mit dem übertragenen,
zweiten Prüfkennzeichen auf Übereinstimmung verglichen wird.

2. Verfahren nach Anspruch 1, wobei das Prüfkennzeichen aus vier Zeichen besteht.

3. Verfahren nach Anspruch 1 oder 2, wobei die Personendaten zur Berechnung der Prüfkennzeichen aus Name sowie wahlweise aus der Gruppe bestehend aus Geburtsdatum und/oder Geburtsort ausgewählt werden.

4. Verfahren nach Anspruch 3, wobei zur Ausführung des kryptografischen Protokolls ein spezifisches Zeichenalphabet von 36 Zeichen verwendet wird.

5. Verfahren nach einem der Ansprüche 4 oder 5,.

6. Verfahren nach einem der Ansprüche 1 bis 4, wobei die Zeichenkette nach dem Prinzip einer Rotationsmaschine auf die Sendezeichenkette gestreut wird.

6. Verfahren nach einem der Ansprüche 1 bis 4, wobei die Zufallszahl eine Pseudozufallszahl ist.

7. Verfahren nach einem der Ansprüche 1 bis 6, wobei aus den an den Datenbankserver zu übertragenden Daten ein Hashwert berechnet wird, der ebenfalls an den Datenbankserver übertragen und am Datenbankserver überprüft wird.

8. Verfahren nach einem der vorhergehenden Ansprüche, **dadurch gekennzeichnet, dass** das erste Prüfkennzeichen elektronisch an das Computerterminal übertragen wird.

## Claims

1. Method for the verification of personal data for handling customers, comprising the steps:
calculating a first verification code based on the read personal data of an identity document by means of a first algorithm in a verification device for detecting fake identity documents;
transmitting the first verification code to a computer terminal;
calculating a second verification code based on the personal data by means of the first algorithm in the computer terminal;
comparing the first and second verification codes in the computer terminal for a match; and
if the first and second verification codes match, transmitting the personal data to a database server,
wherein for transmitting the personal data to the database server a multistep, cryptographic protocol is implemented,
wherein for implementing the cryptographic protocol a random number is calculated, a character string is formed from the name, the second verification code and the random number, the character string is scattered onto a call sign string, the call sign string is transmitted to the database server and the scattering is reversed on the database server and the random number is separated,
wherein on the database server a third verification code is calculated from the name according to the first algorithm and the latter is compared for a match with the transmitted, second verification code.

2. Method according to claim 1, wherein the verification code consists of four characters.

3. Method according to claim 1 or 2, wherein the personal data for calculating the verification code is selected from the name and optionally from a group consisting of the date of birth and/or place of birth.

4. Method according to claim 3, wherein for implementing the cryptographic protocol a specific character alphabet of 36 characters is used.

5. Method according to any of claims 4 or 5,.

6. Method according to any of claims 1 to 4, wherein the character string is scattered onto the call sign string according to the principle of a rotary machine.

6. Method according to any of claims 1 to 4, wherein the random number is a pseudo-random number.

7. Method according to any of claims 1 to 6, wherein from the data to be transmitted to the database server a hash value is calculated, which is also transmitted to the database server and is checked on the database server.

8. Method according to any of the preceding claims, **characterised in that** the first verification code is transmitted electronically to the computer terminal.

## Revendications

1. Procédé servant à vérifier des données personnelles dans les relations avec les clients, avec les étapes de :
calcul d'un premier numéro de contrôle sur la base des données personnelles lues d'un document d'identité au moyen d'un premier algorithme dans un appareil de contrôle servant à identifier des documents d'identité falsifiés ;
transmission du premier numéro de contrôle sur un terminal informatique ;
calcul d'un deuxième numéro de contrôle sur la base des données personnelles au moyen du premier algorithme dans le terminal informatique ;
comparaison du premier et du deuxième numéro de contrôle dans le terminal informatique pour indiquer une concordance ; et
dans les cas d'une concordance du premier et du deuxième numéro de contrôle, transmission des données personnelles à un serveur de base de données,
dans lequel un protocole cryptographique à plusieurs phases est exécuté pour la transmission des données personnelles au serveur de base de données,
dans lequel un nombre aléatoire est calculé pour exécuter le protocole cryptographique, une chaîne de caractères est formée à partir des noms, du deuxième numéro de contrôle et du nombre aléatoire, la chaîne de caractères est dispersée sur une chaîne de caractères d'envoi, la chaîne de caractères d'envoi est envoyée au serveur de base de données et, au niveau du serveur de base de données, la dispersion est inversée et le nombre aléatoire est séparé,
dans lequel un troisième numéro de contrôle est calculé d'après le premier algorithme à partir du nom au niveau du serveur de base de données et il est comparé au deuxième numéro de contrôle transmis pour indiquer une concordance.

2. Procédé selon la revendication 1, dans lequel le numéro de contrôle est constitué de quatre caractères.

3. Procédé selon la revendication 1 ou 2, dans lequel les données personnelles sont choisies, pour calculer les numéros de contrôle, parmi le nom ainsi qu'au choix parmi le groupe constitué de la date de naissance et/ou du lieu de naissance.

4. Procédé selon la revendication 3, dans lequel un alphabet de caractères spécifiques de 36 caractères est utilisé pour exécuter le protocole cryptographique.

5. Procédé selon l'une quelconque des revendications 4 ou 5,.

6. Procédé selon l'une quelconque des revendications 1 à 4, dans lequel la chaîne de caractères est dispersée sur la chaîne de caractères d'envoi selon le principe d'une presse rotative.

6. Procédé selon l'une quelconque des revendications 1 à 4, dans lequel le nombre aléatoire est un pseudo-nombre aléatoire.

7. Procédé selon l'une quelconque des revendications 1 à 6, dans lequel est calculée, à partir des données à transmettre au serveur de base de données, une valeur de hachage, qui est également transmise au serveur de base de données et est vérifiée au niveau du serveur de base de données.

8. Procédé selon l'une quelconque des revendications précédentes, **caractérisé en ce que** le premier numéro de contrôle est transmis de manière électronique au terminal informatique.
